# EUROPÄISCHE PATENTSCHRIFT

(11) **EP 3 017 523 B1**
(45) Veröffentlichungstag und Bekanntmachung des Hinweises auf die Patenterteilung: **22.03.2017**
(21) Anmeldenummer: 14735931.9
(22) Anmeldetag: 02.07.2014
(51) Int. Cl.: H02J 7/35

(54) **VERFAHREN ZUM BETRIEB EINES BATTERIEWANDLERS UND BIDIREKTIONALER BATTERIEWANDLER**
CONTROLLING METHOD FOR BATTERY-CONVERTER AND BIDIRECTIONAL BATTERY-CONVERTER
PROCÉDÉ DE COMMANDE DE CONVERTISSEUR COMPORTANT UNE BATTERIE AINSI QUE LES CONVERTISSEURS COMPRTANT UNE BATTERIE QUI SONT BIDIRECTIONNELS

(30) Priorität: 03.07.2013 DE 102013107012
(43) Veröffentlichungstag der Anmeldung: 11.05.2016
(73) Patentinhaber: SMA Solar Technology AG, 34266 Niestetal (DE)
(72) Erfinder: ALLERT, Claus, 34260 Kaufungen (DE); BUKVIC-SCHÄFER, Aleksandra-Sasa, 34119 Kassel (DE); WEIDE, Johannes, 34125 Kassel (DE)
(74) Vertreter: Lahnor, Peter
(86) Internationale Anmeldenummer: PCT/EP2014/064049
(87) Internationale Veröffentlichungsnummer: WO 2015/000952

(56) Entgegenhaltungen:
- EP-A1- 1 965 483

## Beschreibung

### TECHNISCHES GEBIET DER ERFINDUNG

Die Erfindung bezieht sich auf ein Verfahren zum Betrieb eines an ein Wechselstromnetz angeschlossenen bidirektionalen Batteriewandlers unter Berücksichtigung der Verfügbarkeit lokal erzeugter elektrischer Leistung, das die Schritte des Oberbegriffs des unabhängigen Patentanspruchs 1 aufweist.

Weiterhin bezieht sich die vorliegende Erfindung auf einen Batteriewandler mit Messeinrichtungen zum Erfassen des Ladezustands einer angeschlossenen Batterie und mit einer Steuerung, die das Verfahren ausführt.

Bei dem Batteriewandler kann es sich insbesondere um einen DC/AC-Wandler handeln, der direkt an das Wechselstromnetz oder an ein normalerweise mit dem Wechselstromnetz verbundenes Inselnetz angeschlossen ist. Ein solcher Batteriewandler wird auch als Batterieinverter bezeichnet.

Wenn der erfindungsgemäße Batteriewandler als Batterieinverter ausgebildet ist, kann er als Inselwechselrichter ausgelegt sein, der in der Lage ist, eine Wechselspannung in dem Inselnetz vorzugeben, wenn sich das Inselnetz, z. B. beim Zusammenbruch des Wechselstromnetzes, von diesem getrennt hat. Diese Betriebsart des Batteriewandlers wird im folgenden Ersatzstrombetrieb genannt.

Bei dem Batteriewandler kann es sich weiterhin um einen DC/DC-Wandler handeln, der an einen Gleichspannungszwischenkreis eines DC/AC-Wandlers angeschlossen ist, welcher ausgangsseitig an das Wechselstromnetz oder an ein normalerweise mit dem Wechsel-stromnetz verbundenes Inselnetz angeschlossen ist. Dabei kann noch mindestens eine weitere Stromquelle an den Gleichspannungszwischenkreis des DC/AC-Wandlers angeschlossen sein, wie beispielsweise ein Photovoltaikgenerator.

Überhaupt wird lokal erzeugte elektrische Energie, deren Verfügbarkeit beim Betrieb des Batteriewandlers berücksichtigt wird, vorzugsweise aus einer regenerativen Primärenergie erzeugt und dabei insbesondere mit einem Photovoltaikgenerator.

Wenn hier von einem "Wechselstromnetz" die Rede ist, so handelt es sich um ein solches, in dem die Wechselspannung durch eine andere Einrichtung als den erfindungsgemäß betriebenen oder selbst erfindungsgemäßen Wechselrichter vorgegeben wird. Es kann sich um ein lokales oder überregionales, öffentliches oder privates Wechselstromnetz handeln.

Wenn hier von "einer Batterie", die an den Batteriewandler angeschlossen ist, die Rede ist, so kann es sich hierbei um eine einzelne Batterieeinheit handeln. Die Batterie kann aber auch mehrere parallel und/oder seriell verschaltete Einheiten aufweisen. Insbesondere wird sie regelmäßig eine Vielzahl von einzelnen Zellen aufweisen.

Wenn in dieser Beschreibung und den Patentansprüchen von "unteren" Schwellwerten und dem "Unterschreiten" von unteren Schwellwerten die Rede ist, so zielen diese Formulierungen darauf ab, dass eine bestimmte Handlung dann erfolgen sollen, wenn ein Messwert von einem Wert oberhalb des Schwellwerts auf einen Wert unterhalb des Schwellwerts abfällt. Ein oberer Schwellwert ist entsprechend ein Schwellwert, bei dem eine Handlung erfolgen soll, wenn ein Messwert von einem Wert unterhalb des Schwellwerts auf einen Wert oberhalb des Schwellwerts ansteigt. Dabei kann die jeweilige Handlung auch bereits dann ausgelöst werden, wenn der sich ändernde Wert des jeweiligen Messwerts gleich dem unteren oder oberen Messwert ist. Es ist jedoch vielfach einfacher festzustellen, ob der Messwert den jeweiligen unteren Schwellwert unterschreitet oder den jeweiligen oberen Schwellwert überschreitet.

Wenn in der vorliegenden Beschreibung und den Patentansprüchen von einem "ersten", "zweiten", "dritten" usw. Schwellwert oder Betriebsmodus oder Zeitraum oder einer "ersten", "zweiten" usw. Differenz die Rede ist, so soll allein hiermit keinerlei Rangfolge oder Abfolge angedeutet werden. Vielmehr sollen diese Angaben ausschließlich die Bezugnahme auf die jeweiligen Schwellwerte, Betriebsmodi, Zeiträume und Differenzen erleichtern.

### STAND DER TECHNIK

Aus der EP 1 965 483 A1 ist eine Zusatzeinrichtung bekannt, die zwischen einem öffentlichen Wechselstromnetz und einer Eigenerzeugungsanlage anzuordnen ist. Die Zusatzeinrichtung weist eine selbständige Freischaltstelle auf, mit der die Eigenerzeugungsanlage dem Wechselstromnetz zuschaltbar ist. Eine in der Zusatzeinrichtung befindliche Netzüberwachungseinrichtung öffnet die selbständige Freischaltstelle bei Netzausfall des öffentlichen Wechselstromnetzes. Über ein zweites Schaltelement der Zusatzeinrichtung ist die Eigenerzeugungsanlage einem Inselnetz mit mehreren an die Zusatzeinrichtung angeschlossenen Verbrauchern und einem Inselwechselrichter zuschaltbar. Der Inselwechselrichter wird aus einer Batterie gespeist. Über einen Schalter ist auch das Inselnetz im Normalfall mit dem öffentlichen Stromnetz verbunden, so dass dieses eine Wechselspannung in dem Inselnetz vorgibt. Nur wenn das Wechselstromnetz ausfällt, wird das Inselnetz von dem Wechselstromnetz getrennt. Dann gibt der Inselwechselrichter die Wechselspannung in dem Inselnetz vor. Auf diese Wechselspannung kann die Eigenerzeugungsanlage mit dem zweiten Schaltelement aufgeschaltet werden. Wenn das Inselnetz an das öffentliche Wechselstromnetz angeschlossen ist und aus diesem versorgt wird, wird die Batterie des Inselwechselrichters ständig nachgeladen, so dass bei Ausfällen des Wechselstromnetzes genügend Energie zur Verfügung steht. Dabei kann der Energiefluss und die Spannung der Batterie so beeinflusst werden, dass eine lange Lebensdauer der Batterie gewährleistet wird. Eine Berücksichtigung der Verfügbarkeit lokal erzeugter elektrischer Leistung findet bei dem hier beschriebenen Verfahren zum Betrieb einer Ersatzstromanlage nicht statt.

Aus dem Abschlussbericht "Modularer Batteriestromrichter: Entwicklung eines Batteriestromrichters für die modulare Systemtechnik in PV-Anlagen", gefördert durch das Bundesministerium für Bildung, Wissenschaft, Forschung und Technologie, Förderkennzeichen: 0329741, ist eine Steuerung eines Inselwechselrichters in Abhängigkeit vom Ladezustand seiner Batterie bekannt. Der Ladezustand wird in drei Arbeitsbereiche "battery normal", "battery low" und "battery overloaded" unterteilt. Der Arbeitsbereich "battery normal" umfasst Teilbereiche "N" mit einem Ladezustand zwischen 60% und 100%, "V1" mit einem Ladezustand zwischen 40 % und 60 % und "V2" mit einem Ladezustand zwischen 20 % und 40 %. In dem Bereich V2 niedriger Verfügbarkeit der Batterie wird ein Dieselgenerator zur Ladung der Batterie gestartet, falls dieser in dem Inselnetz vorhanden ist. Der Arbeitsbereich "battery low" ist in einen Teilbereich "A1" mit einem Ladezustand von 10 % bis 20 %, einen Teilbereich "A2" mit einem Ladezustand von 0 % bis 10 % und einen Teilbereich "A3" mit einem Ladezustand unter 0 % aufgeteilt. Im Teilbereich A1 werden die Verbraucher in dem Inselnetz teilweise abgeschaltet. In dem Teilbereich A2 werden alle Verbraucher in dem Inselnetz abgeschaltet. In dem Teilbereich A3 wird auch der Inselwechselrichter ausgeschaltet, um eine Tiefentladung der Batterie zu verhindern. Der Arbeitsbereich "battery overloaded" ist in zwei Teilbereiche "UE1" und UE2" mit zunehmender Überladung der Batterie unterteilt. In dem ersten Teilbereich UE1 werden zusätzliche schaltbare Lasten eingeschaltet. Bei einem weiteren Ansteigen der Batteriespannung bis in den Bereich UE2 werden an das Inselnetz angeschlossene Stromeinspeiser wie Photovoltaik- und Windkraftanlagen abgeregelt bzw. abgeschaltet.

Batterien werden auch als Pufferspeicher für aus regenerativen Primärenergien gewonnene elektrische Energie verwendet, um einen lokalen Eigenverbrauch dieser elektrischen Energie am Ort ihrer Erzeugung zu erhöhen. Dabei wird über einen Batteriewandler der jeweiligen Batterie solange elektrische Leistung zugeführt, wie sie elektrische Leistung aufnehmen kann, wenn ein Überschuss an lokal erzeugter elektrischer Leistung gegenüber dem lokalen Leistungsbedarf besteht. Umgekehrt wird der Batterie solange elektrische Leistung entnommen, wie sie diese zur Verfügung stellen kann, wenn die lokal erzeugte elektrische Leistung den lokalen Leistungsbedarf nicht deckt. Um eine darüber hinausgehende Tiefentladung der Batterie zu verhindern, wird die Batterie auf einem minimalen Ladezustand gehalten. Auftretende Selbstentladung der Batterie wird durch Zufuhr elektrischer Leistung kompensiert, die nötigenfalls auch einem angeschlossenen Wechselstromnetz entnommen wird.

### AUFGABE DER ERFINDUNG

Der Erfindung liegt die Aufgabe zugrunde, ein Verfahren zum Betrieb bidirektionalen Batteriewandlers unter Berücksichtigung der Verfügbarkeit lokal erzeugter elektrischer Leistung aufzuzeigen, das eine maximale Funktionalität des Batteriewandlers bei maximaler Wirtschaftlichkeit und minimaler Belastung der Batterie sicherstellt. Darüber hinaus soll ein entsprechender Batteriewandler aufgezeigt werden.

### LÖSUNG

Die Aufgabe der Erfindung wird durch ein Verfahren mit den Merkmalen des unabhängigen Patentanspruchs 1 und durch einen Batteriewandler mit den Merkmalen des Patentanspruchs 17 gelöst. Die abhängigen Patentansprüche definieren bevorzugte Ausführungsformen des erfindungsgemäßen Verfahrens und des erfindungsgemäßen Batteriewandlers.

### BESCHREIBUNG DER ERFINDUNG

Die Erfindung stellt ein Verfahren zum Betrieb eines bidirektionalen Batteriewandlers unter Berücksichtigung der Verfügbarkeit lokal erzeugter elektrischer Leistung bereit. Zu Beginn des Verfahrens werden mehrere Betriebsmodi des Batteriewandlers dahingehend definiert, wann ein Einspeisen von elektrischer Leistung in eine eingangsseitig angeschlossene Batterie bzw. ein Ausgeben von elektrischer Leistung aus der Batterie in Abhängigkeit von einem Ladezustand der Batterie und von ausgangsseitig verfügbarer elektrischer Leistung erfolgt. Dazu werden mehrere Schwellwerte für den Ladezustand der Batterie definiert. Beim Unterschreiten eines ersten unteren Schwellwerts wird von einem ersten Betriebsmodus in einen zweiten Betriebsmodus gewechselt. In dem ersten Betriebsmodus wird elektrische Leistung aus der Batterie ausgegeben, wenn ein lokaler Leistungsbedarf nicht durch die lokal erzeugte elektrische Leistung gedeckt ist und/oder wenn ein globales Unterangebot an elektrischer Leistung in dem Wechselstromnetz vorliegt. Elektrische Leistung wird in dem ersten Betriebsmodus in die Batterie eingespeist, wenn die lokal erzeugte elektrische Leistung den lokalen Leistungsbedarf überschreitet und/oder wenn ein globales Überangebot an elektrischer Leistung in dem Wechselstromnetz vorliegt. In dem zweiten Betriebsmodus wird elektrische Leistung aus der Batterie allenfalls dann ausgegeben, wenn der lokale Leistungsbedarf überhaupt nicht gedeckt ist. Elektrische Leistung wird in dem zweiten Betriebsmodus in die Batterie eingespeist, wenn lokal erzeugte elektrische Leistung verfügbar ist und/oder wenn ein globales Überangebot an elektrischer Leistung vorliegt. Bei einem Ladezustand unter einem zweiten unteren Schwellwert, der unter dem ersten unteren Schwellwert liegt, wird die Batterie durch Einspeisen von elektrischer Leistung bis zum Erreichen eines ersten oberen Schwellwerts aufgeladen, der kleiner oder gleich dem ersten unteren Schwellwert ist. Dieses Aufladen erfolgt, sofern ausgangsseitig überhaupt elektrische Leistung verfügbar ist. Der erste obere Schwellwert ist so gegenüber dem zweiten unteren Schwellwert definiert, dass eine erste Differenz zwischen dem ersten oberen Schwellwert und dem zweiten unteren Schwellwert einen Standby-Verbrauch des Batteriewandlers für einen vorgegebenen ersten Zeitraum abdeckt.

Unter einem "globalen Unterangebot an elektrischer Leistung" ist hier eine Situation zu verstehen, in der die Nachfrage von elektrischer Leistung über das gesamte Wechselstromnetz gesehen an ein begrenztes Angebot an elektrischer Leistung angepasst werden muss, In einer solchen Situation werden alle an das Wechselstromnetz angeschlossenen Lasten grundsätzlich noch ausreichend versorgt; dennoch ist eine Stützung des Wechselstromnetzes durch Einspeisung von zusätzlicher elektrischer Energie sinnvoll.

Wenn in der Definition der vorliegenden Erfindung die Angabe "und/oder" gemacht wird, so ist hiermit gemeint, dass die damit verknüpften Bedingungen einzeln oder auch gemeinsam gesetzt sein können, wobei es im letzteren Fall ausreichend ist, dass eine von beiden Bedingungen erfüllt ist, um die davon abhängige Handlung auszulösen. So kann in dem ersten Betriebsmodus elektrische Leistung aus der Batterie ausgegeben werden, wenn ein lokaler Leistungsbedarf nicht durch lokal erzeugte elektrische Leistung gedeckt ist, ohne Rücksicht auf ein globales Unterangebot an elektrischer Leistung zu nehmen. Ebenso kann in dem ersten Betriebsmodus ausschließlich dann, wenn ein globales Unterangebot an elektrischer Leistung vorliegt, elektrische Leistung aus der Batterie ausgegeben werden, ohne dass auf ein Verhältnis zwischen dem lokalen Leistungsbedarf und der lokal erzeugten elektrischen Leistung Rücksicht genommen wird. Letztlich kann in dem ersten Betriebsmodus elektrische Leistung sowohl dann aus der Batterie ausgegeben werden, wenn der lokale Leistungsbedarf nicht durch lokal erzeugte elektrische Leistung gedeckt ist, als auch dann, wenn ein globales Unterangebot an elektrischer Leistung vorliegt. Entsprechend verhält es sich mit den anderen durch die Angabe "und/oder" verknüpften Bedingungen.

Unabhängig von der Erläuterung im letzten Absatz ist es für den zweiten Betriebsmodus bevorzugt, dass elektrische Leistung in die Batterie sowohl dann eingespeist wird, wenn lokal erzeugte elektrische Leistung verfügbar ist, als auch dann, wenn ein globales Überangebot an elektrischer Leistung vorliegt.

In jedem Fall wird beim Wechsel von dem ersten Betriebsmodus in den zweiten Betriebsmodus die Ausgabe von elektrischer Leistung aus der Batterie stark eingeschränkt, entweder auf null oder, falls die Batterie auch für einen Ersatzstrombetrieb vorgesehen ist, auf solche Situationen, in denen der lokale Leistungsbedarf überhaupt nicht gedeckt ist, weil das Wechselstromnetz überlastet ist oder zusammengebrochen ist. Zudem wird die Einspeisung von elektrischer Leistung in die Batterie auf Situationen ausgeweitet, in denen überhaupt lokal erzeugte elektrische Leistung verfügbar ist. So wird in dem zweiten Betriebsmodus einerseits eine weitergehende Entladung der Batterie möglichst verhindert. Andererseits findet möglichst ein Wiederaufladen der Batterie durch Einspeisen von lokal erzeugter elektrischer Leistung statt, damit die Batterie wieder als aktiver Puffer für lokal erzeugte elektrische Leistung und/oder das globale Angebot an elektrischer Leistung verfügbar ist.

Wenn der Ladezustand der Batterie weiter bis unter den zweiten unteren Schwellwert fällt, der unter dem ersten unteren Schwellwert liegt, wird die Batterie, sofern überhaupt elektrische Leistung am Ausgang des Batteriewandlers verfügbar ist, wieder aufgeladen, bis ihr Ladezustand einen ersten oberen Schwellwerts erreicht. Die dabei in die Batterie eingespeiste elektrische Energiemenge ist so abgestimmt, dass sie einen Standby-Verbrauch des Batteriewandlers für einen vorgegebenen ersten Zeitraum abdeckt. Selbst wenn anschließend keine weitere Leistung mehr in die Batterie eingespeist wird, weil keine lokal erzeugte elektrische Leistung verfügbar ist, wird der Ladezustand der Batterie den zweiten unteren Schwellwert erst nach dem vorgegebenen ersten Zeitraum wieder erreichen. Dieser Zeitraum kann z. B. auf einen Wert ≥ 12 Stunden festgelegt werden, um bei mit einem Photovoltaikgenerator lokal erzeugter elektrischer Leistung über Nacht abwarten zu können, ob nicht am nächsten Morgen wieder lokal erzeugte elektrische Leistung zur Verfügung steht. Die erste Differenz zwischen dem ersten oberen Schwellwert, auf den die Batterie im Zweifel mit elektrischer Leistung aus dem Wechselstromnetz aufgeladen wird, und dem zweiten unteren Schwellwert ist auch mindestens so groß zu wählen, dass ein Betrieb des Batteriewandlers beim Aufladen der Batterie bis zum Erreichen des ersten oberen Schwellwerts mit einem optimierten, d. h. maximalen Wirkungsgrad möglich ist. Ein solcher Wirkungsgrad wird in aller Regel nur bei einem vergleichsweise großen Ladestrom in die Batterie über einen Mindestzeitraum erreicht. In jedem Fall wird bei der vorliegenden Erfindung nicht das Konzept verfolgt, die erste Differenz zwischen dem ersten oberen Schwellwert und dem zweiten unteren Schwellwert zu minimieren, um bei einem Ladevorgang möglichst wenig elektrische Energie aus dem Wechselstromnetz zu entnehmen. Vielmehr wird die aus dem Wechselstromnetz entnommene elektrische Energie möglichst effizient verwendet, und es wird gleich soviel elektrische Energie aus dem Wechselstromnetz in die Batterie eingespeist, dass mit einer vernünftigen Wahrscheinlichkeit keine weitere solche Einspeisung erfolgen muss, weil innerhalb des ersten Zeitraums die lokal erzeugte elektrische Leistung wieder zur Verfügung steht.

Wenn bei dem erfindungsgemäßen Verfahren ein dritter unterer Schwellwert, der unter dem zweiten unteren Schwellwert liegt, unterschritten wird, kann von dem zweiten Betriebsmodus in einen dritten Betriebsmodus gewechselt werden, in dem elektrische Leistung von der Batterie nur noch zur Deckung des Standby-Verbrauchs des Batteriewandlers verwendet wird und in dem elektrische Leistung in die Batterie eingespeist wird, wenn ausgangsseitig elektrische Leistung verfügbar ist. Das heißt, mit dem Unterschreiten des dritten unteren Schwellwerts wird jegliche Ausgabe von elektrischer Energie aus der Batterie nach außen gestoppt. Der Energieverbrauch beschränkt sich damit auf denjenigen des Batteriewandlers. Damit kann die verbleibende Restladung der Batterie über einen maximalen Zeitraum für den Erhalt der Betriebsbereitschaft des Batteriewandlers genutzt werden. Sobald ausgangsseitig elektrische Leistung verfügbar ist, wird die Batterie wieder aufgeladen. Hierfür bedarf es keines Neustarts des Batteriewandlers, der sich in dem dritten Betriebsmodus in einem Standby-Betrieb befindet.

Eine zweite Differenz zwischen dem zweiten unteren Schwellwert und dem dritten unteren Schwellwert, die zusammen den Teilbereich des zweiten Betriebsmodus begrenzen, in dem ausgangsseitig keine elektrische Leistung verfügbar ist, kann eine Energiemenge abdecken, die für einen Ersatzstrombetrieb in dem zweiten Betriebsmodus vorgehalten wird. Dies bedeutet, dass die Batterie auch beim Erreichen des zweiten unteren Schwellwerts noch ausreichend geladen ist, um bis zum Erreichen des dritten unteren Schwellwerts den Ersatzstrombetrieb des Batteriewandlers und von daran angeschlossenen Einrichtungen zu ermöglichen.

Sobald ein vierter unterer Schwellwert, der im Falle des Vorhaltens der Batterie für einen Ersatzstrombetrieb unter dem dritten unteren Schwellwert liegt, unterschritten wird, wird der Batteriewandler bei dem erfindungsgemäßen Verfahren vorzugsweise abgeschaltet. Soweit kein Ersatzstrombetrieb durch die Batterie vorgesehen ist, wird bereits in dem zweiten Betriebsmodus elektrische Leistung aus der Batterie nur noch zur Deckung des Standby-Verbrauchs des Batteriewandlers verwendet. Dann schließt unten an den zweiten unteren Schwellwert direkt der vierte untere Schwellwert an, bei dessen Unterschreiten der Batteriewandler abgeschaltet wird.

Eine Differenz zwischen dem direkt oberhalb des vierten unteren Schwellwerts, d. h. dem niedrigsten über dem vierten unteren Schwellwert, liegenden unteren Schwellwert und dem vierten unteren Schwellwert wird vorzugsweise so gewählt, dass der Standby-Verbrauch des Batteriewandlers auch ohne Einspeisung von elektrischer Leistung in die Batterie noch für einen vorgegebenen zweiten Zeitraum abgedeckt ist. Dieser zweite Zeitraum, in dem sich der Batteriewandler in dem bereits oben angesprochenen Standby-Betrieb befindet und so ein Wiederaufladen der Batterie bei zurückkehrender ausgangsseitiger Leistung ohne manuelles Neustarten ermöglicht, kann z. B. auf 72 Stunden festgelegt werden, oder allgemein auf einen Zeitraum, in dem eine Wiederkehr eines zusammengebrochenen Wechselstromnetzes erwartet werden kann. Typischerweise ist der zweite Zeitraum also um ein Vielfaches länger als der erste Zeitraum.

Bei dem erfindungsgemäßen Verfahren kann eine vierte Differenz zwischen dem vierten unteren Schwellwert und einem fünften unteren Schwellwert, bis zu dem zumindest ein manuelles Wiederaufstarten des Batteriewandlers noch möglich ist, die Selbstentladung der Batterie für einen vorgegebenen dritten Zeitraum abdecken. Da beim Unterschreiten des vierten Schwellwerts der Batteriewandler bereits abgeschaltet wird, sind keine aktiven Maßnahmen beim Unterschreiten des fünften unteren Schwellwerts mehr möglich. Vielmehr bedeutet sein Unterschreiten, dass ein Wiederaufstarten des Batteriewandlers zum Wiederaufladen der Batterie nicht mehr ohne weiteres möglich ist. Entsprechend sollte dieser fünfte Schwellwert möglichst niemals unterschritten werden. Aus diesem Grund ist der vierte untere Schwellwert soweit über dem fünften unteren Schwellwert anzusetzen, dass auch ein längerer Ausfall des Wechselstromnetzes und ein gleichzeitiger längerer Ausfall der lokal erzeugten Leistung überbrückt werden können. Bei niedriger Selbstentladung reicht eine Restladung der Batterie von wenigen Prozentpunkten jedoch aus, um einen vergleichsweise Langen dritten Zeitraum von Wochen oder sogar Monaten auf diese Weise abzudecken. Praktisch kann dieser Wert z. B. auf 3 % SOC (State of Charge) als Maß für den Ladezustand der Batterie festgelegt werden.

Bei dem erfindungsgemäßen Verfahren können auch weitere Schwellwerte oberhalb des ersten unteren Schwellwerts liegen, wie beispielsweise ein sechster unterer Schwellwert, bei dessen Unterschreiten von einem vierten Betriebsmodus, in dem elektrische Leistung aus der Batterie ausgegeben wird, wenn der lokale Leistungsbedarf nicht durch lokal erzeugte elektrische Leistung gedeckt ist und wenn ein globales Unterangebot an elektrischer Leistung vorliegt, und in dem elektrische Leistung in die Batterie eingespeist wird, wenn die lokal erzeugte elektrische Leistung den lokalen Leistungsbedarf übersteigt und wenn ein globales Überangebot an elektrischer Leistung vorliegt, in den ersten Betriebsmodus gewechselt wird. In diesem Fall wird in dem ersten Betriebsmodus elektrische Leistung aus der Batterie ausgegeben, wenn ein globales Unterangebot an elektrischer Leistung vorliegt, und elektrische Leistung wird in die Batterie eingespeist, wenn die lokal erzeugte elektrische Leistung den lokalen Leistungsbedarf überschreitet und wenn ein globales Überangebot an elektrischer Leistung vorliegt. In dieser Ausführungsform des erfindungsgemäßen Verfahrens wird in dem vierten Betriebsmodus mit der Batterie auch eine Maximierung des Eigenverbrauchs der lokal erzeugten elektrischen Leistung vorgenommen, während in dem ersten Betriebsmodus durch Bereitstellung positiver Regelleistung für das Wechselstromnetz nur noch eine Netzdienstleistung erbracht wird.

Eine fünfte Differenz zwischen dem sechsten unteren Schwellwert und dem ersten unteren Schwellwert stellt so eine bestimmte durchschnittliche positive Regelleistung für einen vorgegebenen vierten Zeitraum bereit. Es versteht sich, dass zwischen dem vierten Betriebsmodus und dem ersten Betriebsmodus nur dann gewechselt wird, wenn eine solche positive Regelleistung mit dem Batteriewandler zur Verfügung gestellt wird und entsprechend die Ladezustände zwischen dem sechsten unteren Schwellwert und dem ersten unteren Schwellwert für diese positive Regelleistung reserviert sind.

Wenn beim Unterschreiten eines siebten unteren Schwellwerts, der über dem sechsten unteren Schwellwert liegt, von einem fünften Betriebsmodus, in dem elektrische Leistung aus der Batterie ausgegeben wird, wenn ein lokaler Leistungsbedarf nicht durch lokal erzeugte elektrische Leistung gedeckt ist und/oder wenn ein globales Unterangebot an elektrischer Leistung vorliegt, und in dem elektrische Leistung in die Batterie eingespeist wird, wenn ein globales Überangebot an elektrischer Leistung vorliegt, in den vierten Betriebsmodus gewechselt wird, wird dadurch auch ein Bereich von Ladezuständen oberhalb des sechsten unteren Schwellwerts für die Bereitstellung von Regelleistung für das Wechselstromnetz reserviert, in diesem Fall von negativer Regelleistung.

Konkret kann eine Differenz zwischen einer maximalen Aufladung der Batterie, womit eine maximale reguläre, d. h. die Integrität der Batterie nicht in Frage stellende Aufladung gemeint ist, und dem siebten unteren Schwellwert eine bestimmte durchschnittliche negative Regelleistung für einen vorgegebenen fünften Zeitraum abdecken.

In einer Weiterentwicklung des erfindungsgemäßen Verfahrens wird mindestens einer der Schwellwerte saisonal verändert. Konkret wird er zum Sommer hin abgesenkt und nach dem Sommer wieder angehoben. Hiermit wird der wahrscheinlichen kurzfristigen Wiederverfügbarkeit von lokal durch Photovoltaikgeneratoren erzeugter elektrischer Leistung im Sommer Rechnung getragen. Der konkrete Verlauf der saisonal veränderten unteren Schwellwerte kann kosinusförmig sein, wobei ein Jahr einer Periode der Kosinusfunktion entspricht. Es versteht sich, dass diese Angabe bezogen auf ein Kalenderjahr der Nordhalbkugel entspricht. Auf der Südhalbkugel, auf der der Sommer um den Jahreswechsel liegt, weist der Verlauf der saisonal veränderten Schwellwerte entsprechend eine negative Kosinusform aufweisen. Durch die im Sommer abgesenkten Schwellwerte steht für den Normalbetrieb des Batteriewandlers, in dem er als Pufferspeicher für die lokale erzeugte elektrische Leistung zur Verfügung steht, ein größeres Spektrum von Ladezuständen zur Verfügung.

Bei dem erfindungsgemäßen Verfahren kann weiterhin mindestens einer der Schwellwerte abhängig von Wetterprognosen festgelegt werden. So können beispielsweise bei sonnigem Wetter die Differenzen zwischen den Schwellwerten verkleinert werden, weil schneller wieder lokal erzeugte elektrische Leistung zur Verfügung stehen wird, als bei starker Bewölkung. Zumindest gilt dies bei lokaler Erzeugung von elektrischer Leistung mittels Photovoltaikgeneratoren.

Bei dem erfindungsgemäßen Verfahren ist den jeweiligen unteren Schwellwerten, bei deren Unterschreiten zwischen zwei Betriebsmodi gewechselt wird, typischerweise jeweils ein oberer Schwellwert zugeordnet, der größer oder gleich dem unteren Schwellwert ist und bei dessen Überschreiten in umgekehrter Richtung zwischen denselben Betriebsmodi gewechselt wird. Dabei kann der jeweilige obere Schwellwert zumindest etwas über dem zugehörigen unteren Schwellwert liegen, um instabile Zustände des Batteriewandlers bezüglich seines Betriebszustands, d. h. ein schnelles wiederholtes Wechseln zwischen seinen Betriebsmodi, zu vermeiden.

Ein erfindungsgemäßer Batteriewandler weist Messeinrichtungen zum Erfassen des Ladezustands einer angeschlossenen Batterie und eine Steuerung auf, die das erfindungsgemäße Verfahren ausführt. Die verschiedenen Schwellwerte, die bei dem erfindungsgemäßen Verfahren zur Anwendung kommen, können von extern in die Steuerung eingegeben werden. Die Steuerung kann diese Schwellwerte aber auch auf Basis externer Eingaben und/oder eigener Messwerte in Bezug auf die eingangsseitig angeschlossene Batterie und ausgangsseitige Parameter selbst festlegen.

Konkret kann der Batteriewandler ein DC/AC-Wandler zum direkten Anschließen an ein Wechselstromnetz oder ein mit einem Wechselstromnetz verbindbares Inselnetz oder ein DC/DC-Wandler zum Anschließen an einen eingangsseitigen Gleichspannungszwischenkreis eines ausgangsseitig an ein Wechselstromnetz angeschlossenen DC/AC-Wandlers sein. Im letzteren Fall ist der Gleichspannungszwischenkreis zum Anschließen mindestens einer weiteren Stromquelle parallel zu dem Batteriewandler vorgesehen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: zeigt eine Umgebung, in der ein erfindungsgemäßes Verfahren und ein erfindungsgemäßer Batteriewandler zum Einsatz kommen können.
- **Fig. 2**: zeigt eine andere Umgebung, in der ein erfindungsgemäßes Verfahren und ein erfindungsgemäßer Batteriewandler zum Einsatz kommen können.
- **Fig. 3**: ist eine Auftragung eines State of Charge (SOC) als Maß für den Ladezustand einer Batterie zusammen mit Schwellwerten, an denen bei einer ersten Ausführungsform des erfindungsgemäßen Verfahrens zwischen verschiedenen Betriebsmodi eines an die Batterie angeschlossenen Batteriewandlers gewechselt wird.
- **Fig. 4**: ist eine Fig. 3 entsprechende Auftragung für einen Batteriewandler, der im Gegensatz zu dem Batteriewechselrichter, dessen Betriebsmodi in Fig. 3 aufgetragen sind, nicht für einen Ersatzstrombetrieb vorgesehen ist.
- **Fig. 5**: ist eine Fig. 3 entsprechende Auftragung für einen Batteriewandler, der gegenüber dem Batteriewandler, dessen Betriebsmodi in Fig. 3 aufgetragen sind, zusätzlich zur Bereitstellung von positiver und negativer Regelleistung für ein ausgangsseitig angeschlossenes Wechselstromnetz ausgebildet ist.
- **Fig. 6**: ist eine grundsätzlich Fig. 3 entsprechende Auftragung des SOC der Batterie und der zugehörigen Betriebsmodi des Batteriewandlers, wobei hier die Auftragung über den Zeitraum eines Jahres vorgenommen ist, über das sich einer der Schwellwerte zwischen zwei Betriebsmodi saisonal ändert.
- **Fig. 7**: ist eine Fig. 6 entsprechende Auftragung, wobei sich hier drei Schwellwerte saisonal über das Jahr ändern.
- **Fig. 8**: ist ein Entscheidungsbaum, der die Anwendung der Schwellwerte gemäß Fig. 3, 6 oder 7 bei den entsprechenden Ausführungsformen des erfindungsgemäßen Verfahrens illustriert; und
- **Fig. 9**: ist eine Netzwerkdarstellung der verschiedenen Betriebsmodi des Batteriewandlers bei der Ausführungsform der Erfindung gemäß den Fig. 3 und 6 bis 8.

### FIGURENBESCHREIBUNG

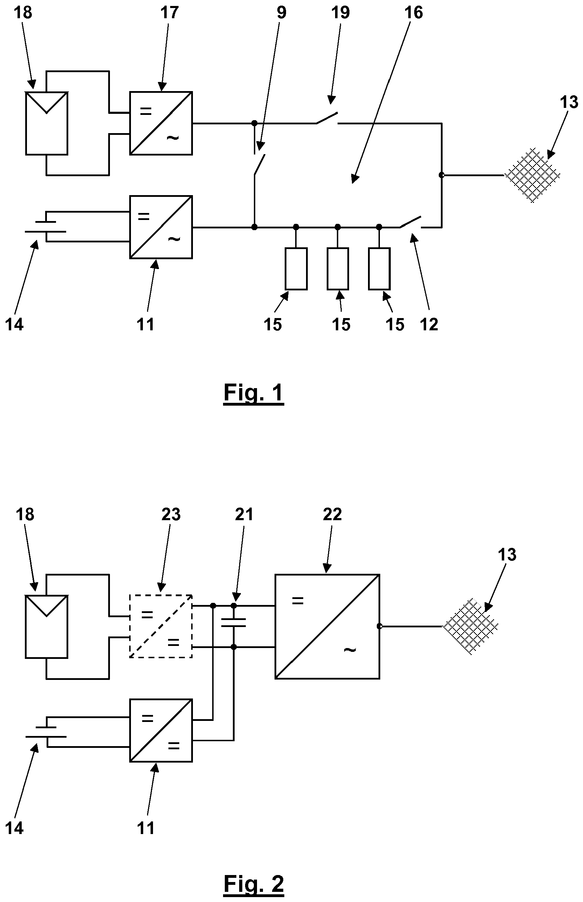

**Fig. 1** illustriert sehr schematisch den ausgangsseitigen Anschluss eines als DC/AC-Wandler ausgebildeten bidirektionalen Batteriewandlers 11 über eine Trennstelle 12 an ein Wechselstromnetz 13. Eingangsseitig ist eine Batterie 14 an den Batteriewandler 11 angeschlossen. Vor der Trennstelle 12 sind Lasten 15 mit dem Batteriewandler 11 verbunden. Bei Ausfall des Wechselstromnetzes 13 und daraufhin geöffneter Trennstelle 12 kann der Batteriewandler 11 als Inselwechselrichter eine Wechselspannung in einem bis zu der Trennstelle 12 reichenden Inselnetz 16 ausbilden. Ein Wechselrichter 17 mit einem eingangsseitig angeschlossenen Photovoltaikgenerator 18 stellt lokal erzeugte elektrische Leistung bereit. Über eine Trennstelle 19 ist der Wechselrichter 17 mit dem Netz 13 verbindbar, und über eine Schaltstelle 9 mit dem Inselnetz 16. Bei Ausfall des Wechselstromnetzes 13 trennt sich der Wechselrichter 17 von dem Wechselstromnetz 13, und er kann dann nach Synchronisation mit der von dem Batteriewandler 11 bereitgestellten Wechselspannung dem Inselnetz 16 über die Schaltstelle 9 zugeschaltet werden. Der Batteriewandler 11 ist überdies vorgesehen, um die Batterie als Pufferspeicher für lokal erzeugte elektrische Leistung von dem Photovoltaikgenerator 18 zu verwenden, um einen Eigenverbrauch dieser Leistung am Ort ihrer Erzeugung zu maximieren. Der Batteriewandler 11 weist dazu nicht separat dargestellte Messeinrichtungen zum Erfassen eines Ladezustands der Batterie 14 in Form ihres sogenannten State of Charge (SOC) und eine Steuereinrichtung auf, die seinen aktuellen Betriebsmodus in Abhängigkeit von dem erfassten Ladezustand und der Verfügbarkeit lokal erzeugter elektrischer Leistung von dem Photovoltaikgenerator 18 festlegt.

**Fig. 2** zeigt, dass der Batteriewandler 11 auch als DC/DC-Wandler ausgebildet sein kann, der an einen eingangsseitigen Gleichspannungszwischenkreis 21 eines DC/AC-Wandlers 22 angeschlossen ist, welcher ausgangsseitig an das Wechselstromnetz 13 angeschlossen ist. An den Gleichspannungszwischenkreis ist parallel zu dem Batteriewandler 11 ein Photovoltaikgenerator 18 als weitere Stromquelle angeschlossen. Dabei ist mit gestrichelten Linien ein optionaler DC/DC-Wandler 23 zur Spannungsanpassung angedeutet, über den der Photovoltaikgenerator 18 an den Gleichspannungszwischenkreis angeschlossen sein kann. Auch wenn der Batteriewandler 11 hier einen Gleichstrom ausgibt, hat er grundsätzlich dieselben Funktionen wie der Batteriewandler 11 gemäß Fig. 1, außer dass der Batteriewandler 11 gemäß Fig. 2 keine Wechselspannung in einem Inselnetz ausbilden kann. Dazu ist aber der DC/AC-Wandler 22 gemäß Fig. 2 in der Lage, auch wenn in Fig. 2 kein von dem Wechselstromnetz 13 trennbares Inselnetz dargestellt ist.

Im Folgenden werden verschiedene Ausführungsformen eines erfindungsgemäßen Betriebs des Batteriewandlers 11 gemäß Fig. 1 oder 2 in Abhängigkeit vom Ladezustand seiner eingangsseitig angeschlossenen Batterie 14 und der Verfügbarkeit lokal erzeugter elektrischer Leistung von dem Photovoltaikgenerator 18 beschrieben.

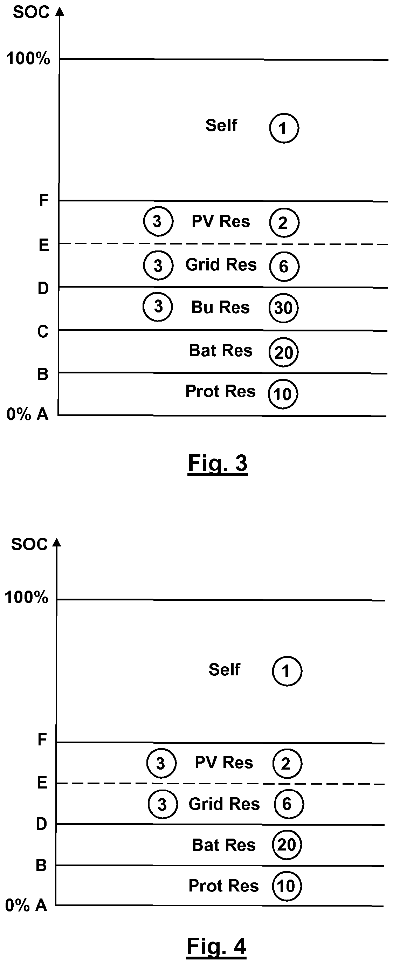

In **Fig. 3** ist der Ladezustand in Form des SOC seiner Batterie von 0 % bis 100 % aufgetragen. Bestimmte SOC-Werte sind als Schwellwerte A, B, C, D, E, F markiert. Dabei sind die Differenzen zwischen diesen Schwellwerten ebenso wie ihre Abstände zu dem SOC von 100 % nicht maßstäblich dargestellt. Vielmehr ist hier ausschließlich die Reihung der Schwellwerte A bis F richtig wiedergegeben.

Die Schwellwerte B bis F werden verwendet, um den Betriebsmodus des Batteriewandlers 11 gemäß Fig. 1 festzulegen. Der Betriebsmodus bestimmt, wann elektrische Leistung aus der Batterie 14 ausgeben bzw. umgekehrt elektrische Leistung in die Batterie 14 eingespeist wird. In einem Bereich des SOC oberhalb des Schwellwerts F, der hier auch als erster unterer Schwellwert bezeichnet wird, und bis zu einem SOC von 100 % nutzt der Batteriewandler die angeschlossene Batterie, um einen Eigenverbrauch von lokal erzeugter elektrischer Leistung zu maximieren. Insbesondere wird diese elektrische Leistung aus einer regenerativen primären Energiequelle und ganz insbesondere von dem Photovoltaikgenerator 18 gemäß Fig. 1 erzeugt. An dem Ausgang des Batteriewandlers steht darüber hinaus aber auch noch elektrische Leistung aus dem Wechselstromnetz 13 gemäß Fig. 1 zur Verfügung. Auch diese elektrische Leistung kann von dem Batteriewandler 11 grundsätzlich in die Batterie 14 eingespeist werden. Der Betriebsmodus mit dem Hauptziel der Maximierung des Eigenverbrauchs wird in dieser Beschreibung auch kurz mit "Self" bezeichnet. Da er gemäß Fig. 3 oberhalb des ersten unteren Schwellwerts F praktiziert wird, ist er hier zudem der Betriebsmodus, der in dieser Beschreibung und den Patentansprüchen mit dem "ersten Betriebsmodus" gemeint sein kann. Als dieser erste Betriebsmodus ist er in Fig. 3 mit dem Bezugszeichen 1 versehen.

Wenn der SOC den ersten unteren Schwellwert F unterschreitet, wechselt der Batteriewandler von seinem ersten Betriebsmodus 1 in einen zweiten Betriebsmodus 3, in dem er die Ausgabe von elektrischer Leistung aus der Batterie einstellt und auf Verfügbarkeit von lokal erzeugter elektrischer Leistung zum Wiederaufladen der Batterie bis oberhalb des Schwellwerts F wartet. Wenn der SOC dabei bis unter einen zweiten unteren Schwellwert D fällt, wird, soweit elektrische Leistung aus dem ausgangsseitig angeschlossenen Wechselstromnetz verfügbar ist, die Batterie mit dieser elektrischen Leistung bis zu einem ersten oberen Schwellwert E aufgeladen, um auch ohne Verfügbarkeit von lokal erzeugter elektrischer Leistung wieder längere Zeit durchzuhalten, bis der zweite untere Schwellwert D erneut unterschritten wird. Der Bereich des zweiten Betriebsmodus 3 ist hier in drei Teilbereiche 2, 6 und 30 unterteilt. In dem obersten Teilbereich 2 oberhalb des ersten oberen Schwellwerts E erfolgt das Wiederaufladen der Batterie nur mit lokal erzeugter elektrischer Leistung. Daher wird die Differenz zwischen dem ersten unteren Schwellwert F und dem ersten oberen Schwellwert E auch als "PV Res" für "Photovoltaikreserve" bezeichnet.

Zwischen dem ersten oberen Schwellwert E und dem zweiten unteren Schwellwert D erstreckt sich der zweite Teilbereich 6, in dem von einem SOC unterhalb des zweiten unteren Schwellwerts D kommend die Aufladung der Batterie auch mit elektrischer Leistung aus dem Wechselstromnetz erfolgt. Eine Differenz zwischen dem ersten oberen Schwellwert E und dem zweiten unteren Schwellwert E hier auch als Grid Res für Grid Reserve, englisch für Netzreserve, bezeichnet. Unterhalb des zweiten unteren Schwellwerts D schließt sich ein Teilbereich 30 des zweiten Betriebsmodus 3 an, bis in den hinein bei Ausfall des Wechselstromnetzes elektrische Leistung aus der Batterie verwendet wird, um einen Ersatzstrombetrieb mit Hilfe des Batteriewandlers aufrechtzuerhalten. Dabei markiert eine Differenz zwischen dem zweiten unteren Schwellwert D und dem dritten unteren Schwellwert C eine für diesen Ersatzstrombetrieb verfügbare, hier als "Bu Res" für "Backup-Reserve" bezeichnete Energiereserve.

Wenn auch der dritte untere Schwellwert C von dem SOC der Batterie unterschritten wird, geht der Batteriewandler in einen vierten Betriebsmodus 20 über, in dem elektrische Leistung aus der Batterie nur noch für den Standby-Verbrauch des Batteriewandlers selbst aufgewandt wird. Auf diese Weise hält der Batteriewandler noch vergleichsweise lange durch, um dann, wenn an seinem Ausgang wieder elektrische Leistung zur Aufladung der Batterie zur Verfügung steht, seine volle Funktion sofort wieder aufnehmen zu können. Eine Differenz zwischen dem dritten Schwellwert C und dem nächst tieferen vierten unteren Schwellwert B wird daher auch als "Bat Res" für Batteriereserve bezeichnet. Bei einem SOC unterhalb des vierten Schwellwerts B wird der Batteriewandler abgeschaltet. Das heißt, der Betriebsmodus 10 ist "aus". Eine Differenz zwischen dem vierten unteren Schwellwert B und einem fünften unteren Schwellwert A beim SOC von 0 %, wird hier auch als "Prot Res" für Protection Reserve; englisch für Schutzreserve, bezeichnet. Diese Energiemenge stellt sicher, dass der Batteriewandler 11, wenn das Wechselstromnetz zurückgekehrt ist, zumindest noch manuell wieder aufstartbar ist, was bis zu dem unteren Schwellwert A hinab möglich ist. Die Prot Res deckt dabei die Selbstentladung der Batterie 14 auch über längere Zeiträume hinweg ab, selbst wenn sie nur wenige Prozent des SOC ausmacht.

Wenn die Batterie 14 aufgrund erneut verfügbarer elektrischer Leistung am Ausgang des Batteriewandlers 11 wieder aufgeladen werden kann, erfolgt ein Wechsel zwischen den Betriebszuständen 10, 20, 3 und 1 in umgekehrter Reihenfolge wie zuvor mit abnehmendem SOC. Dabei können obere Schwellwerte, an denen der jeweilige Wechsel erfolgt, jeweils etwas höher liegen als die unteren Schwellwerte B, C, D und F, damit kein Hin- und Herspringen zwischen zwei benachbarten Betriebsmodi erfolgt. Wenn elektrische Leistung aus dem Wechselstromnetz 13 verfügbar ist, erfolgt von niedrigem SOC aus das Wiederaufladen der Batterie bis zu dem oberen Schwellwert E mit elektrischer Leistung, die auch aus dem Wechselstromnetz 13 stammen kann, und erst darüber ausschließlich mit lokal erzeugter elektrischer Energie. Insoweit ist dann hier der zweite Betriebsmodus 3 zwischen den Teilbereichen 6 und 3 unterteilt.

**Fig. 4** illustriert eine andere Ausführungsform der vorliegenden Erfindung, bei der gegenüber Fig. 3 der dritte untere Schwellwert C und entsprechend der zwischen diesem dritten unteren Schwellwert C und dem darüber liegenden zweiten Schwellwert D liegende Teilbereich 30 der Bu Res, die für den Ersatzstrombetrieb im zweiten Betriebsmodus 3 vorgehalten wird, entfällt. Stattdessen schließt sich nach unten an den zweiten unteren Schwellwert D direkt der Bereich der Bat Res mit dem zweiten Betriebsmodus 20 an, und als nächstes wird beim Unterschreiten des vierten unteren Schwellwerts B der Batteriewandler in den Betriebsmodus 10 "aus" geschaltet. Diese Abfolge der unteren Schwellwerte F, D und B ist anwendbar, wenn der Batteriewandler keine spezielle Energiereserve Bu Res für einen Ersatzstrombetrieb bei Ausfall des ausgangsseitig an den Batteriewandler angeschlossenen Wechselstromnetzes bereithalten muss.

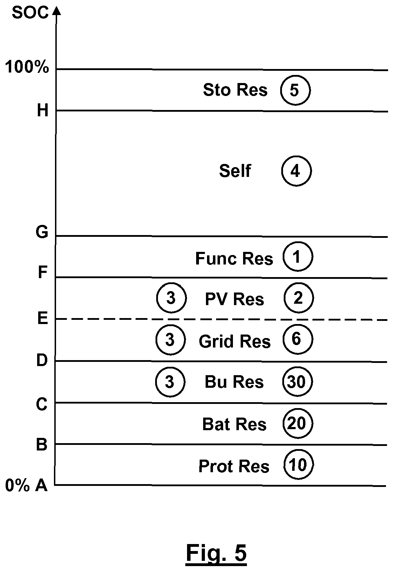

**Fig. 5** zeigt noch einen sechsten und siebten unteren Schwellwert G und H, die auf beiden Seiten des Betriebsmodus Self, in dem ein Eigenverbrauch von lokal erzeugter elektrischer Energie maximiert wird, Energiereserven "Func Res" und "Sto Res" zur Bereitstellung von positiver Regelleistung und negativer Regelleistung für das Wechselstromnetz vorgehalten werden. Diese auch als Netzdienstleistungen bezeichneten Funktionen dienen der Stabilisierung des Wechselstromnetzes, dabei wird Energie aus dem Wechselstromnetz in die Batterie geleitet, wenn insgesamt mehr Energie in das Wechselstromnetz eingespeist als verbraucht wird, und umgekehrt wird Energie aus der Batterie dem Wechselstromnetz zugeführt, wenn der globale Verbrauch die Einspeisung übersteigt. "Func Res" steht dabei für "Funktionsreserve" und "Sto Res" für "Storage-Reserve", englisch für Speicherreserve. Der sechste untere Schwellwert G trennt den Bereich des Betriebsmodus Self, der hier ein vierter Betriebsmodus 4 ist, obwohl er dem Betriebsmodus Self gemäß Fig. 1 entspricht, von einem Bereich des direkt über dem ersten unteren Schwellwerts F liegenden ersten Betriebsmodus 1 ab. In dem Betriebsmodus 1 wird hier keine elektrische Leistung aus der Batterie mehr ausgegeben, um den Eigenverbrauch von lokal erzeugter elektrischer Leistung zu erhöhen, sondern nur noch, um das ausgangsseitig an den Batteriewandler angeschlossene Stromnetz zu stabilisieren. Im Bereich der Sto Res ist ein fünfter Betriebsmodus 5 des Batteriewandlers 11 aktiv, in dem er zwar überschüssige elektrische Leistung aus dem Wechselstromnetz in die Batterie einspeist, aber keine lokal erzeugte Leistung mehr. Vielmehr wird diese lokal erzeugte Leistung, falls sie überschüssig ist, abgeregelt. Aus diesem fünften Betriebsmodus 5 geht der Batteriewandler beim Unterschreiten des siebten unteren Schwellwerts H in den vierten Betriebsmodus 4 über. Wenn positive und negative Regelleistung mit dem Batteriewandler 11 für das ausgangsseitig angeschlossene Wechselstromnetz 13 bereitgestellt werden soll, ist die Anwendung der zusätzlichen sechsten und siebten unteren Schwellwerte G und H sinnvoll. Auf den zusätzlichen sechsten unteren Schwellwert G kann aber auch dann verzichtet werden, wenn sowohl positive wie negative Regelleistung für das Wechselstromnetz bereitgestellt werden soll, insbesondere wenn der erste obere Schwellwert E und der zweite untere Schwellwert D relativ weit unter dem ersten unteren Schwellwert F liegen, so dass die Bereitstellung von positiver Regelleistung im zweiten Betriebsmodus 3 nicht mit der Gefahr verbunden ist, dass bereits kurz darauf der SOC der Batterie unter den zweiten unteren Schwellwert D fällt, so dass die Batterie aus dem Wechselstromnetz heraus aufgeladen wird.

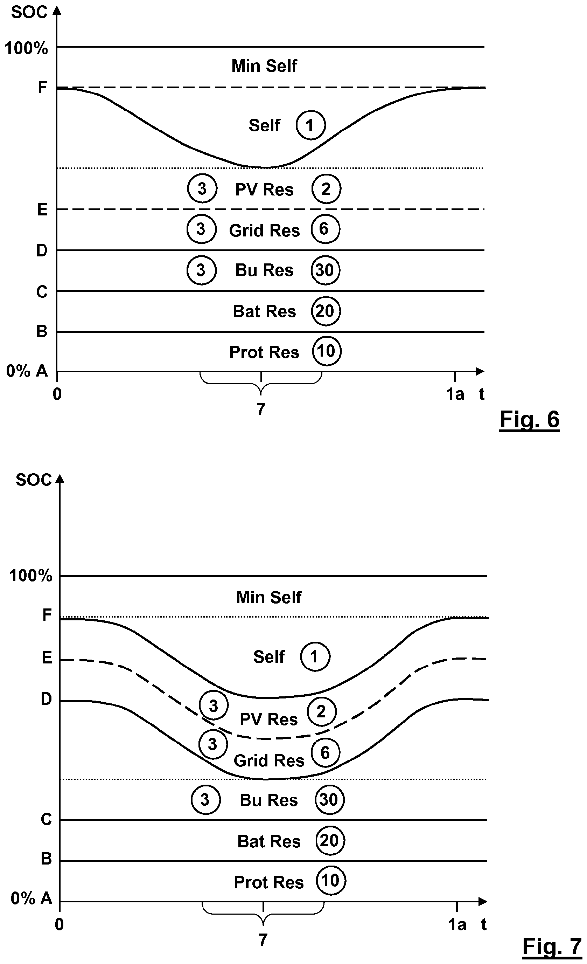

In **Fig. 6** ist zusätzlich zu Fig. 3 die Zeit in Richtung der Abszisse aufgetragen. Konkret ist hier ein Zeitraum von einem Jahr dargestellt. Über dieses Jahr hinweg wird der erste untere Schwellwert F saisonal verändert. Im Sommer 7 liegt er tiefer und vergrößert damit den Bereich des Betriebsmodus Self für den Eigenverbrauch, weil im Sommer mit dem Photovoltaikgenerator 18 lokal erzeugte elektrische Energie auch nach einem Rückgang mit hoher Wahrscheinlichkeit kurzfristig wieder zur Verfügung steht. In den anderen Jahreszeiten steigt der erste untere Schwellwert F bis zum Winter hin an, wo er vergleichsweise nahe an einem SOC von 100 % liegt und nur einen Teilbereich "Min Self" für die Optimierung des Eigenverbrauchs belässt, der über das ganze Jahr gegeben ist.

**Fig. 7** illustriert in einer Fig. 6 entsprechenden Darstellung eine saisonale Veränderung nicht nur des ersten unteren Schwellwerts F, sondern auch des zweiten unteren Schwellwerts D und des dazwischen liegenden ersten oberen Schwellwerts E, um die Betriebsmodi 1 und 3 des Batteriewandlers noch stärker an die saisonalen Besonderheiten anzupassen, bis beim Unterschreiten des dritten Schwellwerts C der Batteriewandler in den Standby-Betrieb geschaltet werden muss. Sowohl in Fig. 6 als auch in Fig. 7 kann die saisonale Variation des ersten unteren Schwellwerts F bzw. auch die saisonale Variation des zweiten unteren Schwellwerts D und des ersten oberen Schwellwerts E einer Periode einer Kosinusfunktion von der Dauer eines Jahres entsprechen. Dabei handelt es sich auf der Nordhalbkugel etwa um das Kalenderjahr und auf der Südhalbkugel um ein Jahr, das in der Mitte des Winters beginnt, so dass die Schwellwerte D, E und F ihre niedrigsten Werte auch dort im Sommer annehmen.

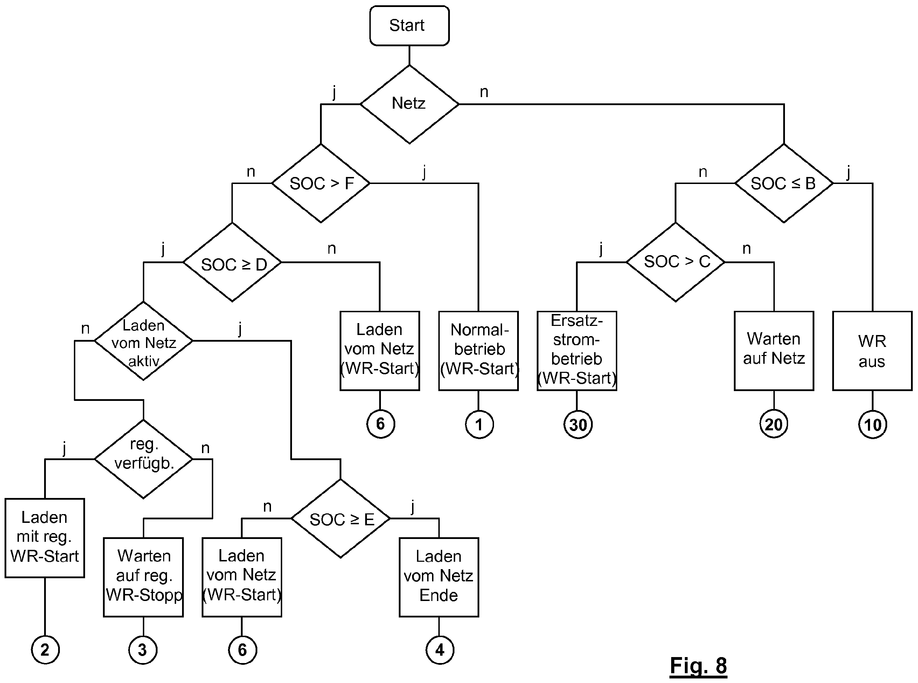

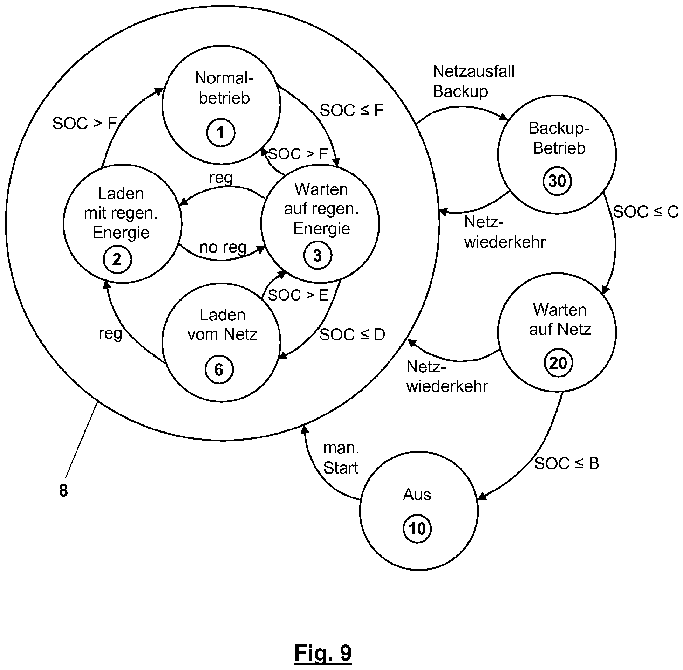

Die im Zusammenhang mit den voranstehenden Figuren beschriebenen Änderungen der Betriebsmodi sind in **Fig. 8** in Form eines Entscheidungsbaums und in **Fig. 9** in Form eines Entscheidungsnetzwerks wiedergegeben. Dabei wird der Entscheidungsbaum zu jedem Zeitpunkt vom Start aus angegangen.

In Fig. 9 ist ein von einer Linie 8 umschlossener Bereich derjenige, in dem das Wechselstromnetz, das ausgangsseitig an den Batteriewandler angeschlossen ist, elektrische Leistung bereitstellt. Alles außerhalb der Linie 8 entspricht einem Netzausfall. In Fig. 9 weisen "reg" und "no reg" auf verfügbare lokal erzeugte elektrische Leistung bzw. nicht verfügbare lokal erzeugte elektrische Leistung hin.

### BEZUGSZEICHENLISTE

- 1: Erster Betriebsmodus
- 2: Teilbereich des zweiten Betriebsmodus
- 3: Zweiter Betriebsmodus
- 4: Vierter Betriebsmodus
- 5: Fünfter Betriebsmodus
- 6: Teilbereich des zweiten Betriebsmodus
- 7: Sommer
- 8: Linie
- 9: Schaltstelle
- 10: Betriebsmodus "aus"
- 11: Batteriewandler
- 12: Trennstelle
- 13: Wechselstromnetz
- 14: Batterie
- 15: Last
- 16: Inselnetz
- 17: Wechselrichter
- 18: Photovoltaikgenerator
- 19: Trennstelle
- 20: Dritter Betriebsmodus
- 21: Gleichspannungszwischenkreis
- 22: DC/AC-Wandler
- 23: DC/DC-Wandler
- 30: Teilbereich des zweiten Betriebsmodus
- A: Fünfter unterer Schwellwert
- B: Vierter unterer Schwellwert
- C: Dritter unterer Schwellwert
- D: Zweiter unterer Schwellwert
- E: Erster oberer Schwellwert
- F: Erster unterer Schwellwert
- G: Sechster unterer Schwellwert
- H: Siebter unterer Schwellwert

## Patentansprüche

1. Verfahren zum Betrieb eines an ein Wechselstromnetz (13) angeschlossenen bidirektionalen Batteriewandlers (11) unter Berücksichtigung der Verfügbarkeit lokal erzeugter elektrischer Leistung, mit:
- Definieren mehrerer Betriebsmodi (1, 3, 4, 5, 10, 20) des Batteriewandlers (11) hinsichtlich eines Einspeisens von elektrischer Leistung in eine eingangsseitig angeschlossene Batterie (14) und eines Ausgebens von elektrischer Leistung aus der Batterie (14) in Abhängigkeit von einem Ladezustand der Batterie (14) und von ausgangsseitig verfügbarer elektrischer Leistung;
- Definieren mehrerer Schwellwerte (A bis G) für den Ladezustand der Batterie (14); und
- beim Unterschreiten eines ersten unteren Schwellwerts (F) Wechseln von einem ersten Betriebsmodus (1), in dem elektrische Leistung aus der Batterie (14) ausgegeben wird, wenn ein lokaler Leistungsbedarf nicht durch die lokal erzeugte elektrische Leistung gedeckt ist und/oder wenn ein globales Unterangebot an elektrischer Leistung in dem Wechselstromnetz (13) vorliegt, und in dem elektrische Leistung in die Batterie (14) eingespeist wird, wenn die lokal erzeugte elektrische Leistung den lokalen Leistungsbedarf überschreitet und/oder wenn ein globales Überangebot an elektrischer Leistung in dem Wechselstromnetz (13) vorliegt, in einen zweiten Betriebsmodus (3),
wobei in dem zweiten Betriebsmodus (3) keine elektrische Leistung aus der Batterie (14) oder nur dann elektrische Leistung aus der Batterie (14) ausgegeben wird, wenn der lokale Leistungsbedarf überhaupt nicht gedeckt ist, und elektrische Leistung in die Batterie (14) eingespeist wird, wenn lokal erzeugte elektrische Leistung verfügbar ist und/oder wenn ein globales Überangebot an elektrischer Leistung in dem Wechselstromnetz (13) vorliegt,
**dadurch gekennzeichnet,**
- **dass** bei einem Ladezustand (SOC) unter einem zweiten unteren Schwellwert (D), der unter dem ersten unteren Schwellwert (F) liegt, wenn ausgangsseitig elektrische Leistung verfügbar ist, die Batterie (14) durch Einspeisen von elektrischer Leistung bis zum Erreichen eines ersten oberen Schwellwerts (E) aufgeladen wird, der kleiner oder gleich dem ersten unteren Schwellwert (F) ist, wobei eine erste Differenz (Grid Res) zwischen dem ersten oberen Schwellwert (E) und dem zweiten unteren Schwellwert (D) so gewählt wird, dass ein Standby-Verbrauch des Batteriewandlers (11) für einen vorgegebenen ersten Zeitraum abgedeckt ist.

2. Verfahren nach Anspruch 1, **dadurch gekennzeichnet, dass** beim Aufladen der Batterie (14) bis zum Erreichen des ersten oberen Schwellwerts (E) der Batteriewandler (11) mit einem optimierten Wirkungsgrad betrieben wird.

3. Verfahren nach Anspruch 1 oder 2, wobei in dem zweiten Betriebsmodus (3) elektrische Leistung aus der Batterie (14) ausgegeben wird, wenn der lokale Leistungsbedarf überhaupt nicht gedeckt ist, **dadurch gekennzeichnet, dass** beim Unterschreiten eines dritten unteren Schwellwerts (C), der unter dem zweiten unteren Schwellwert (D) liegt, von dem zweiten Betriebsmodus (3) in einen dritten Betriebsmodus (20) gewechselt wird, in dem elektrische Leistung aus der Batterie (14) nur noch zur Deckung eines Standby-Verbrauchs des Batteriewandlers (11) verwendet wird und elektrische Leistung in die Batterie (14) eingespeist wird, wenn ausgangsseitig elektrische Leistung verfügbar ist.

4. Verfahren nach Anspruch 3, **dadurch gekennzeichnet, dass** eine zweite Differenz (Bu Res) zwischen dem zweiten unteren Schwellwert (D) und dem dritten unteren Schwellwert (C) eine vorgegebene Energiemenge für einen Ersatzstrombetrieb (30) in dem zweiten Betriebsmodus (3) abdeckt.

5. Verfahren nach Anspruch 3 oder 4, **dadurch gekennzeichnet, dass** beim Unterschreiten eines vierten unteren Schwellwerts (B), der unter dem dritten unteren Schwellwert (C) liegt, der Batteriewandler (11) abgeschaltet wird.

6. Verfahren nach Anspruch 5, **dadurch gekennzeichnet, dass** eine dritte Differenz (Bat Res) zwischen dem niedrigsten über dem vierten unteren Schwellwert (B) liegenden unteren Schwellwert (C oder D) und dem vierten unteren Schwellwert (B) den Standby-Verbrauch des Batteriewandlers (11) für einen vorgegebenen zweiten Zeitraum abdeckt.

7. Verfahren nach einem der Ansprüche 5 bis 6, **dadurch gekennzeichnet, dass** eine vierte Differenz (Prot Res) zwischen dem vierten unteren Schwellwert (B) und einem fünften unterem Schwellwert (A), bis zu dem ein zumindest manuelles Wiederaufstarten des Batteriewandlers (11) noch möglich ist, die Selbstentladung der Batterie (14) für einen vorgegebenen dritten Zeitraum abdeckt.

8. Verfahren nach einem der vorhergehenden Ansprüche, **dadurch gekennzeichnet, dass** beim Unterschreiten eines sechsten unteren Schwellwerts (G), der über dem ersten unteren Schwellwert (F) liegt, von einem vierten Betriebsmodus (4), in dem elektrische Leistung aus der Batterie (14) ausgegeben wird, wenn der lokale Leistungsbedarf nicht durch lokal erzeugte elektrische Leistung gedeckt ist und wenn ein globales Unterangebot an elektrischer Leistung vorliegt, und in dem elektrische Leistung in die Batterie (14) eingespeist wird, wenn die lokal erzeugte elektrische Leistung den lokalen Leistungsbedarf überschreitet und wenn ein globales Überangebot an elektrischer Leistung vorliegt, in den ersten Betriebsmodus (1) gewechselt wird, wobei in dem ersten Betriebsmodus (1) elektrische Leistung aus der Batterie (14) ausgegeben wird, wenn ein globales Unterangebot an elektrischer Leistung vorliegt, und in dem elektrische Leistung in die Batterie (14) eingespeist wird, wenn die lokal erzeugte elektrische Leistung den lokalen Leistungsbedarf überschreitet und wenn ein globales Überangebot an elektrischer Leistung vorliegt.

9. Verfahren nach Anspruch 8, **dadurch gekennzeichnet, dass** eine fünfte Differenz (Func Res) zwischen dem sechsten unteren Schwellwert (G) und dem ersten unteren Schwellwert (F) eine bestimmte durchschnittliche positive Regelleistung für einen vorgegebenen vierten Zeitraum bereitstellt.

10. Verfahren nach Anspruch 8 oder 9, **dadurch gekennzeichnet, dass** beim Unterschreiten eines siebten unteren Schwellwerts (H), der über dem sechsten unteren Schwellwert (G) liegt, von einem fünften Betriebsmodus (5), in dem elektrische Leistung aus der Batterie (14) ausgegeben wird, wenn ein lokaler Leistungsbedarf nicht durch lokal erzeugte elektrische Leistung gedeckt ist und/oder wenn ein globales Unterangebot an elektrischer Leistung vorliegt, und in dem elektrische Leistung in die Batterie (14) eingespeist wird, wenn ein globales Überangebot an elektrischer Leistung vorliegt, in den vierten Betriebsmodus (4) gewechselt wird.

11. Verfahren nach Anspruch 10, **dadurch gekennzeichnet, dass** eine sechste Differenz (Sto Res) zwischen einer maximalen Aufladung der Batterie (SOC 100 %) und dem siebten unteren Schwellwert (H) eine bestimmte durchschnittliche negative Regelleistung für einen vorgegebenen fünften Zeitraum bereitstellt.

12. Verfahren nach einem der vorhergehenden Ansprüche, **dadurch gekennzeichnet, dass** mindestens ein Schwellwert (F, E, D) zum Sommer (7) hin abgesenkt und nach dem Sommer (7) wieder angehoben wird oder dass mindestens ein Schwellwert (D, E, F) abhängig von Wetterprognosen festgelegt wird.

13. Verfahren nach einem der vorhergehenden Ansprüche, **dadurch gekennzeichnet, dass** mindestens einem unteren Schwellwert (B, C, F, G, H), bei dessen Unterschreiten zwischen zwei Betriebsmodi (20, 10; 3, 20; 1, 3; 4, 1; 5, 4) gewechselt wird, ein oberer Schwellwert zugeordnet ist, der größer oder gleich dem unteren Schwellwert (B, C, F, G, H) ist und bei dessen Überschreiten in umgekehrter Richtung zwischen denselben Betriebsmodi (10, 20; 20, 3; 3, 1; 1, 4; 4, 5) gewechselt wird.

14. Batteriewandler (11) mit Messeinrichtungen zum Erfassen des Ladezustands (SOC) einer angeschlossenen Batterie (14) und mit einer Steuerung, die das Verfahren nach einem der vorhergehenden Ansprüche ausführt.

15. Batteriewandler (11) nach Anspruch 14, **dadurch gekennzeichnet, dass** der Batteriewandler (11) ein DC/AC-Wandler zum direkten Anschließen an ein Wechselstromnetz (13) oder ein mit einem Wechselstromnetz (13) verbindbares Inselnetz (16) oder ein DC/DC-Wandler zum Anschließen an einen eingangsseitigen Gleichspannungszwischenkreis (21) eines ausgangsseitig an ein Wechselstromnetz (13) angeschlossenen DC/AC-Wandlers (22) ist, wobei mindestens eine weitere Stromquelle parallel zu dem Batteriewandler (11) an den Gleichspannungszwischenkreis (21) anschließbar ist.

## Claims

1. A method for operating a bidirectional battery converter (11) connected to an AC grid (13), taking into account an availability of locally generated electrical power, comprising:
- defining a plurality of operating modes (1, 3, 4, 5, 10, 20) of the battery converter (11) with regard to feeding electrical power into a battery (14) connected on an input side and outputting electrical power from the battery (14) depending on a state of charge of the battery (14) and on electrical power available on an output side;
- defining a plurality of threshold values (A to G) for the state of charge of the battery (14); and
- in a case of a first lower threshold value (F) being undershot, changing from a first operating mode (1), in which electrical power is output from the battery (14) if a local power demand is not covered by the locally generated electrical power and/or if there is a global undersupply of electrical power in the AC grid (13), and in which electrical power is fed into the battery (14) if the locally generated electrical power exceeds the local power demand and/or if there is a global oversupply of electrical power in the AC grid (13), to a second operating mode (3),
- wherein in the second operating mode (3) no electrical power is output from the battery (14) or electrical power is output from the battery (14) only if the local power demand is not covered at all, and electrical power is fed into the battery (14) if locally generated electrical power is available and/or if there is a global oversupply of electrical power in the AC grid (13),
**characterized**
- **in that** in the case of a state of charge (SOC) below a second lower threshold value (D), which is below the first lower threshold value (F), if electrical power is available on the output side, the battery (14) is charged by electrical power being fed in until a first upper threshold value (E) is reached, which is less than or equal to the first lower threshold value (F), wherein a first difference (Grid Res) between the first upper threshold value (E) and the second lower threshold value (D) is chosen so as to cover a standby consumption of the battery converter (11) for a predefined first time period.

2. The method as claimed in claim 1, **characterized in that** in a case where the battery (14) is charged until the first upper threshold value (E) is reached, the battery converter (11) is operated with an optimized efficiency.

3. The method as claimed in claim 1 or 2, wherein in the second operating mode (3) electrical power is output from the battery (14) if the local power demand is not covered at all, **characterized in that** in the case of a third lower threshold value (C) being undershot, which is below the second lower threshold value (D), a change is made from the second operating mode (3) to a third operating mode (20), in which electrical power from the battery (14) is used only for covering a standby consumption of the battery converter (11) and electrical power is fed into the battery (14) if electrical power is available on the output side.

4. The method as claimed in claim 3, **characterized in that** a second difference (Bu Res) between the second lower threshold value (D) and the third lower threshold value (C) covers a predefined amount of energy for backup electricity operation (30) in the second operating mode (3).

5. The method as claimed in claim 3 or 4, **characterized in that** in the case of a fourth lower threshold value (B) being undershot, which is below the third lower threshold value (C), the battery converter (11) is switched off.

6. The method as claimed in claim 5, **characterized in that** a third difference (Bat Res) between the smallest lower threshold value (C or D) that is above the fourth lower threshold value (B) and the fourth lower threshold value (B) covers the standby consumption of the battery converter (11) for a predefined second time period.

7. The method as claimed in any of claims 5 to 6, **characterized in that** a fourth difference (Prot Res) between the fourth lower threshold value (B) and a fifth lower threshold value (A), up to which at least manual restarting of the battery converter (11) is still possible, covers the self-discharge of the battery (14) for a predefined third time period.

8. The method as claimed in any of the preceding claims, **characterized in that** in the case of a sixth lower threshold value (G) being undershot, which is above the first lower threshold value (F), the change is made from a fourth operating mode (4), in which electrical power is output from the battery (14) if the local power demand is not covered by locally generated electrical power and if there is a global undersupply of electrical power, and in which electrical power is fed into the battery (14) if the locally generated electrical power exceeds the local power demand and if there is a global oversupply of electrical power, to the first operating mode (1), wherein in the first operating mode (1) electrical power is output from the battery (14) if there is a global undersupply of electrical power, and electrical power is fed into the battery (14) if the locally generated electrical power exceeds the local power demand and if there is a global oversupply of electrical power.

9. The method as claimed in claim 8, **characterized in that** a fifth difference (Func Res) between the sixth lower threshold value (G) and the first lower threshold value (F) provides a specific average positive control power for a predefined fourth time period.

10. The method as claimed in claim 8 or 9, **characterized in that** in the case of a seventh lower threshold value (H) being undershot, which is above the sixth lower threshold value (G), a change is made from a fifth operating mode (5), in which electrical power is output from the battery (14) if a local power demand is not covered by locally generated electrical power and/or if there is a global undersupply of electrical power, and in which electrical power is fed into the battery (14) if there is a global oversupply of electrical power, to the fourth operating mode (4).

11. The method as claimed in claim 10, **characterized in that** a sixth difference (Sto Res) between a maximum charging of the battery (SOC 100%) and the seventh lower threshold value (H) provides a specific average negative control power for a predefined fifth time period.

12. The method as claimed in any of the preceding claims, **characterized in that** at least one threshold value (F, E, D) is lowered toward summer (7) and is raised again after summer (7) or that at least one threshold value (D, E, F) is defined depending on weather forecasts.

13. The method as claimed in any of the preceding claims, **characterized in that** at least one lower threshold value (B, C, F, G, H), whose undershooting results in a change between two operating modes (20, 10; 3, 20; 1, 3; 4, 1; 5, 4) is assigned an upper threshold value which is greater than or equal to the lower threshold value (B, C, F, G, H) and whose overshooting results in a change in the opposite direction between the same operating modes (10, 20; 20, 3; 3, 1; 1,4; 4, 5).

14. A battery converter (11) comprising measuring devices for detecting the state of charge (SOC) of a connected battery (14) and comprising a controller, which performs the method as claimed in any of the preceding claims.

15. The battery converter (11) as claimed in claim 14, **characterized in that** the battery converter (11) is a DC/AC converter for direct connection to an AC grid (13) or an island grid (16) that can be connected to an AC grid (13), or a DC/DC converter for connection to an input-side DC link circuit (21) of a DC/AC converter (22) connected to an AC grid (13) on its output side, wherein at least one further current source can be connected to the DC link circuit (21) in parallel with the battery converter (11).

## Revendications

1. Procédé destiné au fonctionnement d'un convertisseur bidirectionnel pour batterie (11) raccordé à un réseau à courant alternatif (13), en tenant compte de la disponibilité de la puissance électrique produite au niveau local, comprenant :
- la définition de plusieurs modes de fonctionnement (1, 3, 4, 5, 10, 20) dudit convertisseur pour batterie (11) en ce qui concerne une alimentation de la puissance électrique dans une batterie (14) raccordée au niveau de l'entrée, d'une part, et d'une émission de la puissance électrique à partir de la batterie (14), d'autre part, en fonction d'un état de charge de la batterie (14) et de la puissance électrique disponible au niveau de la sortie ;
- la définition de plusieurs valeurs de seuil (A à G) pour l'état de charge de la batterie (14) ; et
- dans le cas d'un franchissement en dessous d'une première valeur de seuil inférieure (F), un changement est réalisé pour passer d'un premier mode de fonctionnement (1), dans lequel de la puissance électrique est émise en dehors de la batterie (14) quand un besoin de puissance au niveau local n'est pas couvert par la puissance électrique produite au niveau local et/ou quand il y a une offre globale insuffisante de puissance électrique dans le réseau à courant alternatif (13), d'une part, et dans lequel de la puissance électrique alimentée dans la batterie (14) quand la puissance électrique produite au niveau local est supérieure au besoin de puissance au niveau local et/ou quand il y a une offre globale excédentaire de puissance électrique dans le réseau à courant alternatif (13), d'autre part, à un deuxième mode de fonctionnement (3),
où dans le deuxième mode de fonctionnement (3), aucune puissance électrique n'est émise en dehors de la batterie (14) ou alors une puissance électrique est émise en dehors de la batterie (14) seulement si le besoin de puissance au niveau local n'est pas du tout couvert et que de la puissance électrique est alimentée dans la batterie (14) quand de la puissance électrique produite au niveau local est disponible et/ou quand il y a une offre globale excédentaire en puissance électrique dans le réseau à courant alternatif (13),
**caractérisé en ce que**
- quand un état de charge (SOC) se situe en dessous d'une deuxième valeur de seuil inférieure (D), laquelle se situe en dessous de la première valeur de seuil inférieure (F) quand de la puissance électrique est disponible au niveau de la sortie, la batterie (14) est chargée par l'alimentation de la puissance électrique jusqu'à atteindre une première valeur de seuil supérieure (E) qui est inférieure ou égale à la première valeur de seuil inférieure (F), où une première différence (Grid Res) entre la première valeur de seuil supérieure (E) et la deuxième valeur de seuil inférieure (D) est sélectionnée de telle sorte qu'une consommation en veille du convertisseur pour batterie (11) est couverte pour une première période prédéfinie.

2. Procédé selon la revendication 1,
**caractérisé en ce que** lors du chargement de la batterie (14) jusqu'à atteindre la première valeur de seuil supérieure (E), le convertisseur pour batterie (11) est exploité avec un niveau d'efficacité optimisé.

3. Procédé selon la revendication 1 ou 2, où de la puissance électrique est émise en dehors de la batterie (14) dans le deuxième mode de fonctionnement (3) quand le besoin de puissance au niveau local n'est pas du tout couvert,
**caractérisé en ce que** dans le cas d'un franchissement en dessous d'une troisième valeur de seuil inférieure (C) qui se situe en dessous de la deuxième valeur de seuil inférieure (D), un changement est réalisé pour passer du deuxième mode de fonctionnement (3) dans un troisième mode de fonctionnement (20), dans lequel de la puissance électrique émise en dehors de la batterie (14) n'est plus employée qu'en vue de couvrir une consommation en veille du convertisseur pour batterie (11) et de la puissance électrique est alimentée dans la batterie (14) quand de la puissance électrique est disponible au niveau de la sortie.

4. Procédé selon la revendication 3,
**caractérisé en ce qu'**une deuxième différence (Bu Res) entre la deuxième valeur de seuil inférieure (D) et la troisième valeur de seuil inférieure (C) couvre une quantité prédéfinie en énergie pour une alimentation électrique de secours (30) dans le deuxième mode de fonctionnement (3).

5. Procédé selon la revendication 3 ou 4,
**caractérisé en ce que** le convertisseur pour batterie (11) est déconnecté dans le cas d'un franchissement en dessous d'une quatrième valeur de seuil inférieure (B) qui se situe en dessous de la troisième valeur de seuil inférieure (C).

6. Procédé selon la revendication 5,
**caractérisé en ce qu'**une troisième différence (Bat Res) entre la valeur de seuil inférieure (C ou D) la plus basse se situant au-dessus de la quatrième valeur de seuil inférieure (B) et la quatrième valeur de seuil inférieure (B) couvre la consommation en veille du convertisseur pour batterie (11) pour une deuxième période prédéfinie.

7. Procédé selon l'une des revendications 5 à 6,
**caractérisé en ce qu'**une quatrième différence (Prot Res) entre la quatrième valeur de seuil inférieure (B) et une cinquième valeur de seuil inférieure (A), jusqu'à ce qu'une remise en route, tout au moins manuelle, du convertisseur pour batterie (11) soit encore possible, couvre l'autodécharge de la batterie (14) pour une troisième période prédéfinie.

8. Procédé selon l'une des revendications précédentes,
**caractérisé en ce que** dans le cas d'un franchissement en dessous d'une sixième valeur de seuil inférieure (G) qui se situe au-dessus de la première valeur de seuil inférieure (F), un changement est réalisé pour passer d'un quatrième mode de fonctionnement (4), dans lequel de la puissance électrique est émise en dehors de la batterie (14) quand le besoin de puissance au niveau local n'est pas couvert par la puissance électrique produite au niveau local et quand il y a une offre globale insuffisante de puissance électrique, d'une part, et dans lequel de la puissance électrique est alimentée dans la batterie (14) quand la puissance électrique produite au niveau local est supérieure au besoin de puissance au niveau local et quand il y a une offre globale excédentaire de puissance électrique, d'autre part, au premier mode de fonctionnement (1), où de la puissance électrique est émise en dehors de la batterie (14) dans le premier mode de fonctionnement (1) quand il y a une offre globale insuffisante de puissance électrique et dans lequel de la puissance électrique est alimentée dans la batterie (14) quand la puissance électrique produite au niveau local est supérieure au besoin de puissance au niveau local et quand il y a une offre globale excédentaire de puissance électrique.

9. Procédé selon la revendication 8,
**caractérisé en ce qu'**une cinquième différence (Func Res) entre la sixième valeur de seuil inférieure (G) et la première valeur de seuil inférieure (F) fournit une certaine puissance de réglage positive moyenne pour une quatrième période prédéfinie.

10. Procédé selon la revendication 8 ou 9,
**caractérisé en ce que** dans le cas d'un franchissement en dessous d'une septième valeur de seuil inférieure (H) qui se situe au-dessus de la sixième valeur de seuil inférieure (G), un changement est réalisé pour passer d'un cinquième mode de fonctionnement (5), dans lequel de la puissance électrique est émise en dehors de la batterie (14) quand un besoin de puissance au niveau local n'est pas couvert par la puissance électrique produite au niveau local et/ou quand il y a une offre globale insuffisante en puissance électrique, d'une part, et dans lequel de la puissance électrique est alimentée dans la batterie (14) quand il y a une offre globale excédentaire en puissance électrique, d'autre part, au quatrième mode de fonctionnement (4).

11. Procédé selon la revendication 10,
**caractérisé en ce qu'**une sixième différence (Sto Res) entre une charge maximale de la batterie (SOC 100%) et la septième valeur de seuil inférieure (H) fournit une certaine puissance de réglage négative moyenne pour une cinquième période prédéfinie.

12. Procédé selon l'une des revendications précédentes,
**caractérisé en ce qu'**au moins une valeur de seuil (F, E, D) est abaissée pour et durant l'été (7) et augmentée de nouveau après l'été (7) ou **caractérisé en ce qu'**au moins une valeur de seuil (D, E, F) est déterminée en fonction des prévisions météorologiques.

13. Procédé selon l'une des revendications précédentes,
**caractérisé en ce qu'**une valeur de seuil supérieure est associée à au moins une valeur de seuil inférieure (B, C, F, G, H), pour laquelle un changement est réalisé entre deux modes de fonctionnement (20, 10 ; 3, 20 ; 1, 3 ; 4, 1 ; 5, 4) en cas de dépassement par le bas de ladite valeur de seuil inférieure, laquelle valeur de seuil supérieure est supérieure ou égale à la valeur de seuil inférieure (B, C, F, G, H), d'une part, et pour laquelle un changement est réalisé entre ces mêmes modes de fonctionnement (10, 20 ; 20, 3 ; 3, 1 ; 1, 4 ; 4, 5), mais dans le sens inverse, en cas de dépassement par le haut de cette valeur de seuil inférieure, d'autre part.

14. Convertisseur pour batterie (11) comprenant des systèmes de mesure en vue de reconnaître l'état de charge (SOC) d'une batterie (14) raccordée, ainsi qu'une commande qui exécute le procédé selon l'une des revendications précédentes.

15. Convertisseur pour batterie (11) selon la revendication 14,
**caractérisé en ce que** le convertisseur pour batterie (11) est un convertisseur CC / CA destiné à un raccordement direct à un réseau à courant alternatif (13) ou est un réseau en îlotage (16) pouvant être raccordé à un réseau à courant alternatif (13) ou est un convertisseur CC / CC destiné à un raccordement à un circuit intermédiaire à tension continue (21) se trouvant au niveau de l'entrée, d'un convertisseur (22) CC / CA, raccordé au niveau de la sortie à un réseau à courant alternatif (13), où au moins une autre source de courant peut être raccordée au circuit intermédiaire à tension continue (21), à la parallèle du convertisseur pour batterie (11).
